# EUROPEAN PATENT SPECIFICATION

(11) **EP 1 522 171 B1**
(45) Date of publication and mention of the grant of the patent: **06.09.2006**
(21) Application number: 02807593.5
(22) Date of filing: 15.07.2002
(51) Int. Cl.: H04L 12/28, H04L 29/06

(54) **HOME AGENT OPTIMIZATION FOR HANDLING MOBILE IP AND STATIC MPLS (MULTIPROTOCOL LABEL SWITHCHING)**
HEIMAT-AGENT-OPTIMIERUNG FÜR DIE BEHANDLUNG VON MOBIL-IP UND STATISCHER MPLS (MEHRPROTOKOLL-LABEL-SWITCHING)
OPTIMISATION D'AGENT LOCAL POUR LA GESTION D'IP MOBILE ET DE MPLS STATIQUE (COMMUTATION MULTIPROTOCOLE PAR ETIQUETTE)

(43) Date of publication of application: 13.04.2005
(73) Proprietor: SIEMENS AKTIENGESELLSCHAFT, 80333 München (DE)
(72) Inventor: EISL, Jochen, 85748 Garching (DE); RAUTENBERG, Mathias, 82223 Eichenau (DE)
(86) International application number: PCT/EP2002/007860
(87) International publication number: WO 2004/008690

(56) References cited:
- EP-A- 1 139 634
- WO-A-01/06732
- WO-A-02/13420
- "MPLS-AN INTRODUCTION TO MULTIPROTOCOL LABEL SWITCHING" WHITE PAPER NORTEL NETWORKS, XX, XX, April 2001 (2001-04), pages 1-12, XP002950989
- ARMITAGE G: "MPLS: THE MAGIC BEHIND THE MYTHS" IEEE COMMUNICATIONS MAGAZINE, IEEE SERVICE CENTER. PISCATAWAY, N.J, US, vol. 38, no. 1, January 2000 (2000-01), pages 124-131, XP000908346 ISSN: 0163-6804

## Description

The invention concerns a method and an optimized home agent for transfer of IP datagrams over a path from a sender over a radio access network to a mobile host.

WO 01 06732 A discloses a method for transfer of data over a path from a sender over a radio access network to a mobile host.
"MPLS-an introduction to multiprotocol label switching" white paper Nortel networks, , April 2001 (2001-04), pages 1-12, XP 002950989 discloses a multiprotocol label switching protocol (MPLS), wherein an MPLS node agent sends a data packet to a further node.

The Mobile IP protocol is a concept to deal with user mobility issues for transport of IP related services. As a prerequisite the access network as well as the core network use IP as the network layer protocol and are capable to run the mobile IP protocol in addition. The network architecture for mobile IPv4 includes home agents and foreign agents to build forwarding IP tunnels, when a mobile host moves out of the home network to attach to a different access point for requesting services from a network. The foreign agent represents the default router for a mobile host, if it is attached to an access point outside the home network. When a correspondent node sends packets to a mobile host currently registered at a different location, the home agent intercepts all packets for that host and reroutes them to the new location. The home agent's binding cache contains rerouting information for all mobile hosts currently attached to different access points. The care-of-address specifies the mobile node's temporarily acquired host address after registering at a different location.

Using IP tunnels between home agent and foreign agent becomes inefficient, if the transport network already provides alternative tunneling mechanisms to interconnect various access points. The MPLS called label switching approach offers support for IP traffic engineering by introduction of virtual circuit switched services in connectionless IP based networks. Other benefits of MPLS include the establishment of virtual private networks and provision of traffic trunks with dedicated reserved bandwidth between two endpoints of a path (tunnel). When label switching is active, packet forwarding is based on a fixed label instead of an IP network address or prefix in the routing table. A label is attached by a label ingress router, which is the ingress router of the MPLS path. The label egress router represents the endpoint of a MPLS tunnel. Path setup requires a signaling protocol to agree on path attributes like labels to be used and requested bandwidth for the path etc. Examples are CR-LDP, RSVP-TE or BGP enhancements.

A network operator has to deal with convergence issues, if there is a strategy to offer mobile IP based services in a network, which has been engineered for MPLS. Functional components for mobile IP and MPLS may reside on the same network node in the situation described above. For example one network node may include home agent and label edge router functionality at the same time. The same applies to the mobile foreign agent. It is the challenge of equipment manufacturers to provide integrated solutions for network components, in a way that mobile home / foreign agent are optimized for interworking with MPLS. It means that existing MPLS tunnels may be used for rerouting purposes in mobile IP instead of establishing a separate IP tunnel in parallel. This would allow the network operator to easily adapt mobility services to a MPLS infrastructure without the need for complex network resource management. There is no need to manage MPLS and IP tunnels in parallel.

Mobile IP and MPLS are emerging technologies. Though definition of concepts is quite stable there is no widespread usage so far. A simple approach is to deploy both technologies independently of each other and neglecting the possibilities of convergence. Thus MPLS paths would not be used to transport redirected packets to a mobile foreign agent. Instead MPLS tunnels for traffic engineering purposes and IP tunnels for mobile IP support would exist in parallel. However such a heterogeneous network would enlarge the effort for management of tunnels and represent a burden for consistent network engineering due to different technologies to be deployed in parallel.

A different approach is a loose coupling between MPLS and mobile IP. Home agent and label edge router would reside on the same network node without direct interaction between these components. The same applies to the foreign agent, which includes the label edge router functional components as well. Packets, which are destined for a mobile host, which is attached to a foreign access point would have to be transported by means of an IP tunnel and a MPLS tunnel as well for the loose coupling. Home agent in this example first would have to encapsulate the native IP packet with an additional IP header, afterwards a label is attached to this packet by the label switching ingress router. As a benefit a pure MPLS network might be sufficient to forward packets to the foreign agent for the loose coupling approach. Nevertheless advantage of label switched paths is not used completely, since an additional IP tunnel is required.

An object of the invention is an efficient transport of mobile IP traffic. This is achieved by the invention as set forth in the independent claims.

The invention described herein provides optimal usage of an existing static MPLS infrastructure while introducing IP mobility services. Static here means that label switched paths have been configured in advance based on mechanisms like traffic engineering. Primarily the focus is on a single administrative domain, where a network operator controls all network nodes, which are involved in mobility issues. Though the mechanism is not restricted to a single network domain. With the introduced concept full advantage of an existing MPLS network can be gained for mobile IP forwarding. It is assumed that by means of traffic engineering a mesh of label switched paths has been established, which can be used for redirecting packets between any pair of mobile home agents and foreign agents in the current administrative domain. For the purpose of mobile IP no additional label switched paths have to be created or modified. As well no IP tunnels are required between a home agent and a foreign agent. The solution for convergence proposes an optimisation of mobile home / foreign agents by efficiently incorporating label edge router functionality. A tight coupling between MPLS and mobile IP is achieved. No changes for existing protocols like mobile IP or label distribution protocol are required. Efficient usage of preestablished label switched paths for the transport of redirected packets between mobility agents requires traffic engineering for mobility. In that context it is necessary to gain knowledge about behaviour of mobile users, i.e frequency of leaving home networks, services to be requested at foreign access points etc.

The mechanism described for convergence between MPLS and mobile IP may be extended to different administrative domains. Macro mobility describes the situation, where a mobile user might attach to an access point, which is controlled by a different administrative authority in a geographically distinct area. Mobile IP forwarding and MPLS paths between separate domains may be enabled if service level agreements are established between adjacent network domains.

Advantageous features of the invention are:
- A modified home agent, which includes label edge router capability. Packet forwarding to any mobile host in a visited network is done exclusively by means of label switched paths, which interconnect mobility home and foreign agents. Thus for new mobility bindings in the home agent no creation or modification of label switched paths is required.
- An extended algorithm for mobility forwarding in home agent: If the mobile binding cache contains an entry, which corresponds to the destination address of an incoming packet, the home agent tries to map this care-of-address of the mobile node to a subnetwork address of the list of potential visited subnetworks. After the correct visited subnetwork has been identified the home agent is responsible to determine the proper label switched path for packet forwarding. Each subnetwork is associated with a label and the correct egress interface to use at the home agent.
- Usage of multipurpose label switched paths: These paths are not dedicated for mobile IP and therefore may transport packets for any other purpose as well.
- A list of potential visited subnetworks in the operators network domain. This list is maintained by each home agent in the network domain and configured by means of network administration principles. The list is required to enable mapping of the mobile nodes care of addresses to a visited subnetwork.
- An aggregated FTN table (Forwarding equivalence class To Next hop label forwarding entry): Generally for MPLS label switching the ingress router maintains this table for determining the necessary label and interface to use for a specific destination address. The home agent maintains this table with a single entry for each potential visited subnetwork, instead of an individual entry for each mobility binding. Thus all mobile hosts attached to the same visited subnetwork correspond to one and the same entry in FTN table, which introduces scalability for the combined MPLS / mobility approach.
- A network with preconfigured statically administrated label switched paths. No paths have to be created or modified for the purpose of mobility handover. As a consequence signaling load in the network is reduced and handover delay is independent of setup time for label switched paths. These paths should provide enough bandwidth capacity to enable successful handover of mobile users almost anytime. Thus traffic engineering becomes a major issue for mobile IP with statically managed label switched paths.
- A foreign agent, where the functional entities of mobile IP and MPLS are co-located, but not correlated. Thus the label egress router component runs in parallel on the same host.

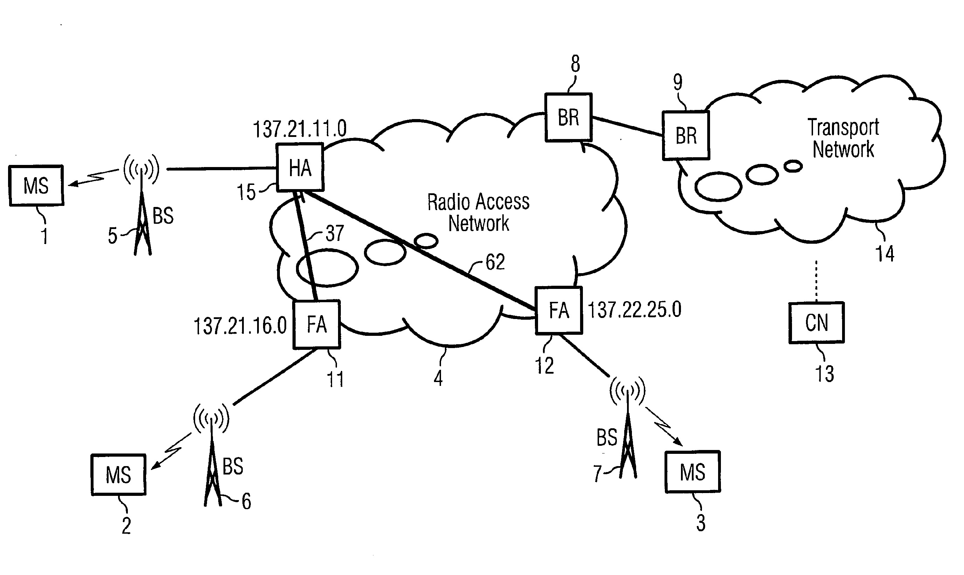

Further advantages of the invention are apparent from the following description of an example of the invention illustrated in figure 1.

Figure 1 shows a block diagram of an IP network.

Three mobile stations MS 1, 2, 3 use some wireless link layer technology to connect to an IP based radio access network 4. Correspondent base stations BS 5, 6 , 7 terminate the radio interface. The radio access network provides mobility support and uses label switched paths LSP 37, 62 for internal transport as already described for this invention. Connectivity to transport networks 14 is achieved via border routers BR 8, 9, which separate the administrative domains. In this example all three mobile stations 1, 2, 3 are located in the same home network 4 - they get access by the same edge router, which includes the home agent (15) functional component at the same time. MS 2 and MS 3 currently moved to different access points (BS 6,7) and attach to the network through foreign agents FA 11 and FA 12 respectively. Two LSP's 37, 62 are illustrated for label switching between home agent HA 15 and foreign agents FA 11, 12. A correspondent node CN 13 typically located at any access point beyond the local network 4 should send data to all three mobile stations1, 2, 3. For packets destined for MS 1 no entry in the binding cache (in 15) is available, thus packets are directly forwarded to MS 1.

Now CN 13 sends data to MS 2. Home agent HA 15 includes a binding for MS 2 with care-of-address 137.21.16.5. From a configured subsystem list, the home agent is aware that MS 2 is currently reachable through subnetwork 137.21.16.0. Finally correspondent entry in FTN table for that subnetwork indicates that home agent 15 needs to code "label 37" on its interface eth0 to forward the packet to the proper label switched path 37. Since LSPs are unidirectional they have to be originated at the HA and terminated at the FA. The illustration includes a further example for MS 3, which is attached to a different access point BS 7, where yet another label switched path (LSP 62) is used to forward packets to the correct destination (via FA12, BS7 to MS 3).

## Claims

1. Method for transfer of an IP packet over a path from a sender (CN 13) over a radio access network (BS 6, HA 15, FA 11) to a mobile host (MS 2),
wherein, when a home agent (HA 15) receives an incoming data packet determined for a mobile host (MS 2) with a destination address (MS 2), the home agent (HA 15) examines if there is a match between the destination address (MS 2) of the packet and a subnetwork address (FA 11) of a foreign agent (FA 11) listed in a list of subnetwork addresses stored at the home agent (HA),
wherein, if there is a match between the destination address (MS 2-address) and a subnetwork address (FA 11) of a foreign agent, the home agent examines whether a preconfigured path from the home agent (HA 15) to this foreign agent exists and wherein the home agent (HA 15) sends the packet to this foreign agent (FA 11) on this preconfigured label switched path (37) if a label switched path (37) to this foreign agent exists.

2. Method according to claim 1, wherein the home agent (HA 15) sends the packet to this foreign agent (FA 11) on this preconfigured label switched path (37) by sending the packet over a port of a forwarding interface (eth0) of the home agent (HA 15) which port is used for the path with this path number (37).

3. Method according to any of the preceding claims, wherein the home agent (HA 15) examines if there is a match between the destination address (MS 2) of the packet and a subnetwork address (FA 11) of a foreign agent (FA 11) only if there is an entry (MS 2) in a binding cache of the home agent (HA 15) which entry corresponds to the destination address (MS 2) of the incoming packet.

4. Method according to any of the preceding claims, wherein a handover of a mobile host (MS 1) from one foreign agent to an other foreign agent is done without creating or modifying a path between the foreign agent and a home agent of this mobile host.

5. Method according to any of the preceding claims, wherein the path (37) is a preconfigured, statically administered, multipurpose label switched path.

6. Method according to any of the preceding claims, wherein a foreign agent (FA 11) and a home agent (HA 15) are packet switched nodes of an IP network.

7. Home agent (HA 15) in which home agent a method according to any of the preceding claims is implemented.

8. Home agent (HA 15), preferably according to claim 7,
- with a memory containing a list of subnetwork addresses of foreign agents,
- with a comparing means for comparing the destination address of an incoming data packet determined for a mobile host (MS2) with stored subnetwork addresses of foreign agents (FA 11, FA 12) for determining the foreign agent (FA 11) to which the packet is to be sent,
- with a means for determining a path (37) for transmission of the packet to the foreign agent (FA 11) by comparing the determined foreign agent (FA 11) address with stored addresses of foreign agents (FA 11, FA 12), between which foreign agents (FA 11, FA 12) and the home agent (HA 15) paths (37, 62) exist,
- with an interface (eth0) for transmitting a packet to a determined foreign agent (FA 11) on a determined, preconfigured path (37).

## Patentansprüche

1. Verfahren für den Transfer eines IP-Pakets über einen Pfad von einer Sendeeinheit (CN 13) über ein Funkzugangsnetz (BS 6, HA 15, FA 11) zu einem mobilen Host (MS 2),
wobei beim Empfang eines eingehenden Datenpakets, das an einen mobilen Host (MS 2) mit einer Bestimmungsadresse (MS 2) gerichtet ist, durch einen Heimatagenten (HA 15), dieser überprüft, ob zwischen der Bestimmungsadresse (MS 2) des Pakets und einer Teilnetzadresse (FA 11) eines Fremdagenten (FA 11), der in einer im Heimatagenten (HA) gespeicherten Liste von Teilnetzadressen geführt wird, Übereinstimmung besteht,
wobei bei Übereinstimmung zwischen der Bestimmungsadresse (MS-2-Adresse)und einer Teilnetzadresse (FA 11) eines Fremdagenten der Heimatagent überprüft, ob es einen im Voraus konfigurierten Pfad vom Heimatagenten (HA 15) zu diesem Fremdagenten gibt, und wobei der Heimatagent (HA 15) das Paket an diesen Fremdagenten (FA 11) auf diesem im Voraus konfigurierten labelvermittelten Pfad (37) sendet, wenn ein labelvermittelter Pfad (37) zu diesem Fremdagenten vorhanden ist.

2. Verfahren nach Anspruch 1, wobei der Heimatagent (HA 15) das Paket an diesen Fremdagenten (FA 11) auf diesem im Voraus konfigurierten labelvermittelten Pfad (37) sendet, indem er das Paket über einen Port einer Transportschnittstelle (ethO) des Heimatagenten (HA 15) sendet, wobei der Port für den Pfad mit dieser Pfadnummer (37) verwendet wird.

3. Verfahren nach einem der vorhergehenden Ansprüche, wobei der Heimatagent (HA 15) überprüft, ob eine Übereinstimmung zwischen der Bestimmungsadresse (MS 2) des Pakets und einer Teilnetzadresse (FA 11) eines Fremdagenten (FA 11) nur dann vorhanden ist, wenn sich im Bindungs-Cachespeicher des Heimatagenten (HA 15) ein Eintrag (MS 2) befindet, der der Bestimmungsadresse (MS 2) des eingehenden Pakets entspricht.

4. Verfahren nach einem der vorhergehenden Ansprüche, wobei eine Übergabe eines mobilen Host (MS 1) von einem Fremdagenten an einen anderen Fremdagenten erfolgt, ohne dass ein Pfad zwischen dem Fremdagenten und dem Heimatagenten dieses mobilen Host erzeugt oder verändert werden muss.

5. Verfahren nach einem der vorangehenden Ansprüche, wobei es sich bei dem Pfad (37) um einen im Voraus konfigurierten, statisch verwalteten, universellen labelvermittelten Pfad handelt.

6. Verfahren nach einem der vorangehenden Ansprüche, wobei ein Fremdagent (FA 11) und ein Heimatagent (HA 15) paketvermittelte Knoten eines IP-Netzes sind.

7. Heimatagent (HA 15), in welchem ein Verfahren nach einem der vorangehenden Ansprüche ausgeführt wird.

8. Heimatagent (HA 15), vorzugsweise nach Anspruch 7,
- mit einem Speicher, der eine Liste von Teilnetzadressen von Fremdagenten enthält,
- mit einem Mittel zum Vergleichen der Bestimmungsadresse eines an einen mobilen Host (MS 2) gerichteten eingehenden Datenpakets mit gespeicherten Teilnetzadressen für Fremdagenten (FA 11, FA 12), um den Fremdagenten (FA 11) zu ermitteln, an den das Paket gesendet werden soll,
- mit einem Mittel zum Bestimmen eines Pfades (37) zur Übertragung des Pakets an den Fremdagenten (FA 11) durch Vergleichen der ermittelten Adresse des Fremdagenten (FA 11) mit gespeicherten Adressen von Fremdagenten (FA 11, FA 12), zwischen denen Pfade (37, 61) der Fremdagenten (FA 11, FA 12) und des Heimatagenten (HA 15) vorhanden sind.
- mit einer Schnittstelle (ethO) zur Übertragung eines Pakets an einen festgelegten Fremdagenten (FA 11) auf einem festgelegten, im Voraus konfigurierten Pfad (37).

## Revendications

1. Procédé pour le transfert d'un paquet IP sur un chemin d'un expéditeur (CN 13) sur un réseau d'accès radioélectrique (BS 6, HA 15, FA 11) vers un hôte mobile (MS 2).
dans lequel, lorsqu'un agent local (HA 15) reçoit un paquet de données entrant déterminé pour un hôte mobile (MS 2) avec une adresse de destination (MS 2), l'agent local (HA 15) examine s'il y a une correspondance entre l'adresse de destination (MS 2) du paquet et une adresse de sous-réseau (FA 11) d'un agent étranger (FA 11) listé dans une liste d'adresses de sous-réseaux stockée dans l'agent local (HA),
dans lequel, s'il y a une correspondance entre l'adresse de destination (adresse MS 2) et une adresse de sous-réseau (FA 11) d'un agent étranger, l'agent local examine si un chemin préconfiguré de l'agent local (HA 15) à cet agent étranger existe et dans lequel l'agent local (HA 15) envoie le paquet à cet agent étranger (FA 11) sur ce chemin commuté avec étiquette préconfiguré (37) si un chemin commuté avec étiquette (37) vers cet agent étranger existe.

2. Procédé selon la revendication 1, dans lequel l'agent local (HA 15) envoie le paquet à cet agent étranger (FA 11) sur ce chemin commuté avec étiquette préconfiguré (37) en envoyant le paquet sur un port d'une interface d'acheminement (eth0) de l'agent local (HA 15) lequel port est utilisé pour le chemin avec ce numéro de chemin (37).

3. Procédé selon l'une quelconque des revendications précédentes, dans lequel l'agent local (HA 15) examine s'il y a une correspondance entre l'adresse de destination (MS 2) du paquet et une adresse de sous-réseau (FA 11) d'un agent étranger (FA 11) uniquement s'il y a une entrée (MS 2) dans un cache de liaison de l'agent local (HA 15) laquelle entrée correspond à l'adresse de destination (MS 2) du paquet entrant.

4. Procédé selon l'une quelconque des revendications précédentes, dans lequel un transfert d'un hôte mobile (MS 1) d'un agent étranger à un autre agent étranger se fait sans créer ni modifier un chemin entre l'agent étranger et un agent local de cet hôte mobile.

5. Procédé selon l'une quelconque des revendications précédentes, dans lequel le chemin (37) est un chemin commuté avec étiquette polyvalent statiquement administré préconfiguré.

6. Procédé selon l'une quelconque des revendications précédentes, dans lequel un agent étranger (FA 11) et un agent local (HA 15) sont des noeuds à commutation par paquets d'un réseau IP.

7. Agent local (HA 15) dans lequel agent local un procédé selon l'une quelconque des revendications précédentes est mis en oeuvre.

8. Agent local (HA 15), préférablement selon la revendication 7,
- avec une mémoire contenant une liste des adresses de sous-réseaux des agents étrangers,
- avec un moyen de comparaison pour comparer l'adresse de destination d'un paquet de données entrant déterminé pour un hôte mobile (MS 2) avec les adresses de sous-réseaux stockées des agents étrangers (FA 11, FA 12) pour déterminer l'agent étranger (FA 11) auquel le paquet doit être envoyé,
- avec un moyen pour déterminer un chemin (37) pour la transmission du paquet à l'agent étranger (FA 11) en comparant l'adresse de l'agent étranger (FA 11) déterminée avec les adresses stockées des agents étrangers (FA 11, FA 12), entre lesquels agents étrangers (FA 11, FA 12) et l'agent local (HA 15) des chemins (37, 62) existent,
- avec une interface (eth0) pour transmettre un paquet à un agent étranger (FA 11) déterminé sur un chemin préconfiguré déterminé (37).
